# EUROPEAN PATENT APPLICATION

(11) **EP 1 102 043 A1**
(43) Date of publication of application: **23.05.2001**
(21) Application number: 00307732.8
(22) Date of filing: 07.09.2000
(51) Int. Cl.: G01F 23/24

(54) **Fluid level alarm**

(30) Priority: 09.09.1999 GB 9921159
(71) Applicant: Walls, Robert William, Skipton BD23 2LE (GB)
(72) Inventor: Walls, Robert William, Skipton BD23 2LE (GB)
(74) Representative: Waddington, Richard

(57) **Abstract**

A bath alarm (30) comprises basin cover sections (32, 34), electrode buttons (54) and a sucker (40) for securing the alarm to a side of a bath (not shown). The bath alarm (30) is powered with a battery and emits an alarm sound from a buzzer when water in the bath completes an electrical circuit between the two button electrodes (54).

## Description

This invention relates to a fluid level alarm.

Many people prefer bathing over showering as it provides them with time to relax and unwind from a stressful day. Warm water is therapeutic for tense muscles, helping them to loosen, thus relieving aches and pains.

The act of filling a bath is often time consuming, especially for deep baths or where a person lives in an area with low water pressure. Many people will begin to run the water in to the bath and walk out of the bathroom for activities while waiting for the bath to fill. The problem with doing this is that it is easy for one to become distracted and forget about the running water. The water then flows over the sides of the tub, creating a large mess for a person to clean up and possibly may cause damage to the surrounding floor.

It is an object of the invention to address the above-mentioned disadvantages.

According to one aspect of the present invention a fluid level indicator comprises fluid level measurement means and indication means, wherein the fluid level measurement means are operable to detect the level of a fluid in a container relative to the measurement means and are operable to activate the indication means to indicate that the level of a fluid has reached a predetermined level.

The indication means may be visual indication means and/or audible indication means.

The fluid level indicator may be a water level indicator, preferably for a bath.

The fluid level measurement means may be operable to measure the fluid level by the fluid being measured completing an electrical circuit of the measurement means, preferably when the fluid reaches a predetermined level.

The measurement means may comprise two electrodes, which may extend away from the fluid level indicator. Preferably, the electrodes are substantially flush with a housing of the indicator. The electrodes may form an opening in an open electrical circuit, which electrical circuit may include a power supply and may include the indication means. The opening in the electrical circuit may be electrically closed by a fluid, the level of which is to be indicated. The closing of the electrical circuit may cause power from the power to be supplied to the indication means.

The fluid level indicator may include fixing means, for fixing the indicator to a container, preferably at a level of a fluid level to be indicated. The fixing means may be a sucker, which may be removable.

The fluid level indicator may include testing means, for testing the functioning thereof. The testing means may be operable to short circuit the measurement means, to thereby cause the activation of the indication means.

The fluid level indicator may include a housing, which may be a sealed housing, most preferably a water tight housing. The power supply and indication means may be located within the housing. The electrodes may extend outside the housing, in which case the remainder of the measurement means may be within the housing.

The electrodes may extend through the housing from the interior to the exterior. The electrodes may sealingly engage with the housing.

The housing may comprise first and second sections which sealingly engage, preferably by means of threaded sections.

The indication means may be audible, preferably a buzzer. The audible indication means may communicate with a, preferably internal, cavity in the housing. The cavity may be sealed from the remainder of the interior of the housing. The cavity may communicate, preferably via a plurality of openings, with the exterior of the housing. The communication with the exterior may be located in a depression in an exterior of the housing.

The housing may be in the shape of a novelty item, such as a boat. The fluid level indicator may be for domestic use in a bath or sink.

The invention may extend to a container, preferably a bath, fitted with an integral fluid level indicator as described above.

A specific embodiment of the present invention will now be described, by way of example, and with reference to the accompanying drawings, in which:

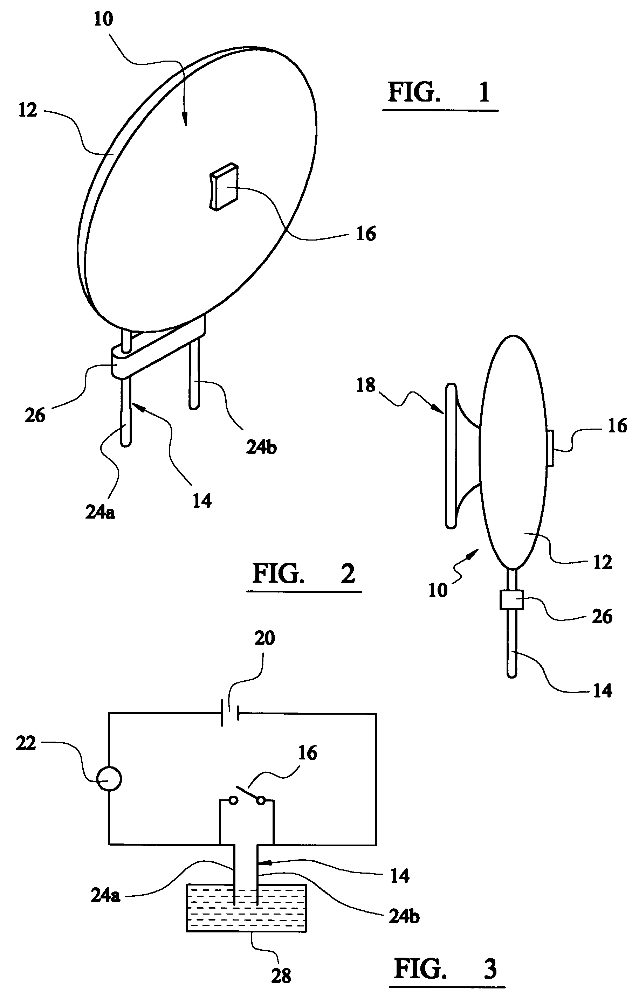

Figure 1 is a schematic perspective view of a bath alarm;
Figure 2 is a schematic side view of the bath alarm;
Figure 3 is a simple circuit diagram for the bath alarm;
Figure 4 is a schematic front view of a second embodiment of bath alarm;
Figure 5 is a schematic side view of the second embodiment;
Figure 6 is a cross-sectional view of Figure 5;
Figure 7 is a cross-sectional view of Figure 4;
Figure 8 is a schematic perspective view of the interior of a base section of the second embodiment;
Figure 9 is a plan view of the exterior of the base;
Figure 10 is a schematic perspective view of the exterior of the base section;
Figure 11 is a side view of the base section;
Figure 12 is a plan view of the interior of the base;
Figure 13 is a perspective view of the exterior of a cover section of the second embodiment;
Figure 14 is an interior view of the cover section; and
Figure 15 is a cross-sectional view of the cover section.

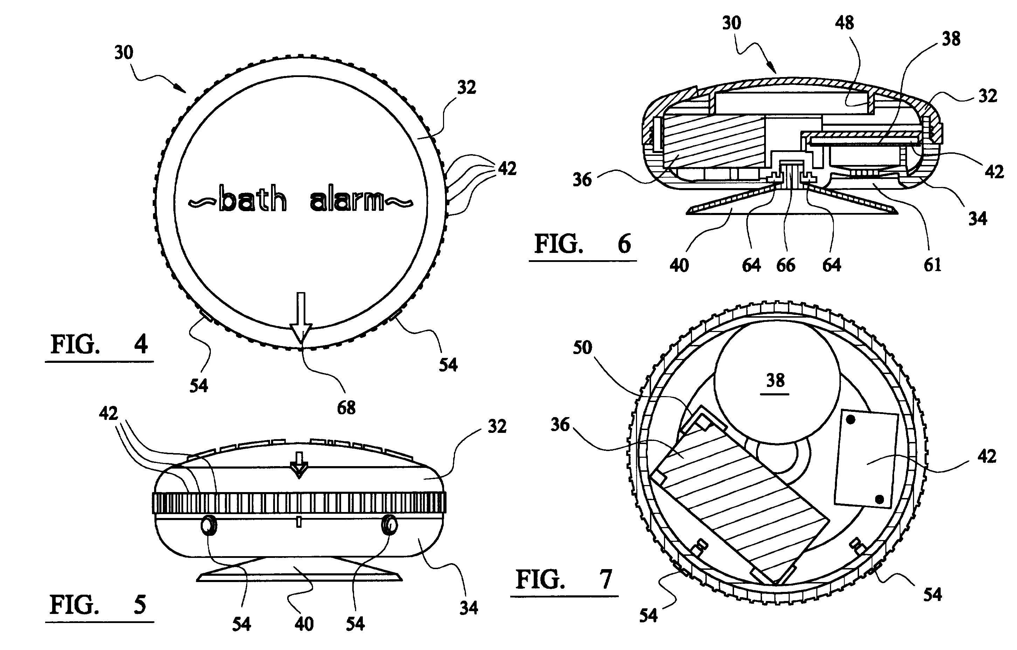

A bath alarm 10 comprises a housing 12, a water level probe 14, an optional test button 16, and suction cup 18 for securing the alarm 10 to a side of a bath 28. The bath alarm 10 is powered by a battery 20 (see figure 3) and emits an alarm sound from a siren 22.

In more detail, the bath alarm 10 consists of a circular shaped plastic housing 12, which is approximately 40 mm in diameter. The housing 12 is designed as the exterior shell of the bath alarm 10 and is intended to protect the interior components.

The housing 12 is water tight to deter potential malfunctioning of the bath alarm due to the ingress of water.

The suction cup 18 is secured to the rear of the housing 12 and allows the bath alarm 10 to be stuck to the side of a bath or sink.

The probe 14 comprises two electrodes 24a and 24b, which are in the form of flush-fitting plates (not shown - alternative electrodes shown in figures). Alternatively, the electrodes project from the bottom of the housing 12 and extend downwards and roughly parallel to each other.

A tie bar 26 extends between upper ends of the two electrodes 24a and 24b to deter flexing thereof.

The electrodes 24a and 24b form opposite sides of a break in an open electrical circuit comprising the battery 20 and the siren 22.

The circuit shown in Figure 3 functions by power being supplied to the siren 22 from the battery 20 when an electrical contact is made between the two electrodes 24a and 24b. The contact may be made by the two electrodes being immersed in water, which conducts electricity from one electrode to the other by means of electrically charged ions in the water. When the circuit is completed by the electrodes being immersed in water, power is supplied to the siren 22.

The optional test button 16 can be depressed to short circuit the electrodes 24a and 24b thereby completing the circuit to allow the siren 22 and the battery 20 to be tested. The test button 16 also allows the battery 20 to be tested in the event that the siren 22 is fully functioning.

In use, the bath alarm 10 is secured to the inside wall of a bath or sink, at a level at which a user wishes to be warned when water reaches that level. The level may be close to top of the bath, to indicate that the bath is about to overflow. Alternatively, the level may be low down in a bath, if only a small amount of water is required.

The bath alarm 10 is arranged so that the electrodes 24a and 24b are, in one version, at a lower face of the device or, in another version, project downwards. The bath is then filled in the usual way. When the water in the bath reaches the level of the electrodes 24a and 24b and they become immersed in the water, the circuit between the electrodes 24a and 24b is completed. This results in power being supplied to the siren 22 from the battery 20, which causes the siren to sound to alert a user that the desired level of water in the bath has been reached. The user can then turn off the water supply, before the water goes above a desired level or spills from the bath.

When the water is at the desired level, the alarm can be removed from the side of the bath or moved upwards slightly to prevent the alarm sounding continuously.

An on/off switch may be provided to silence the alarm and allow the bath alarm 10 to remain in position whilst the electrodes 24a and 24b are immersed in water.

The siren 22 may be switchable to provide different types of sound, which may be intermittent, or have different volumes or different tones.

The battery 20 is of the AA type. Only a single battery is necessary, consequently, the current supplied is very small. This means that the current supplied to the bath water is of a negligible amount and so does not have any negative safety aspects. Although the possibility of a user receiving electrical current from the battery may at first instance be unappealing, and so may deter the user from wishing to use the device, the bath alarm described herein is very safe to use because of the small amount of current used.

Figures 4 to 15 show a second embodiment of bath alarm 30, which comprises a cover portion 32, a base portion 34, a battery 36, a buzzer 38, a sucker 40 and a printed circuit board 42.

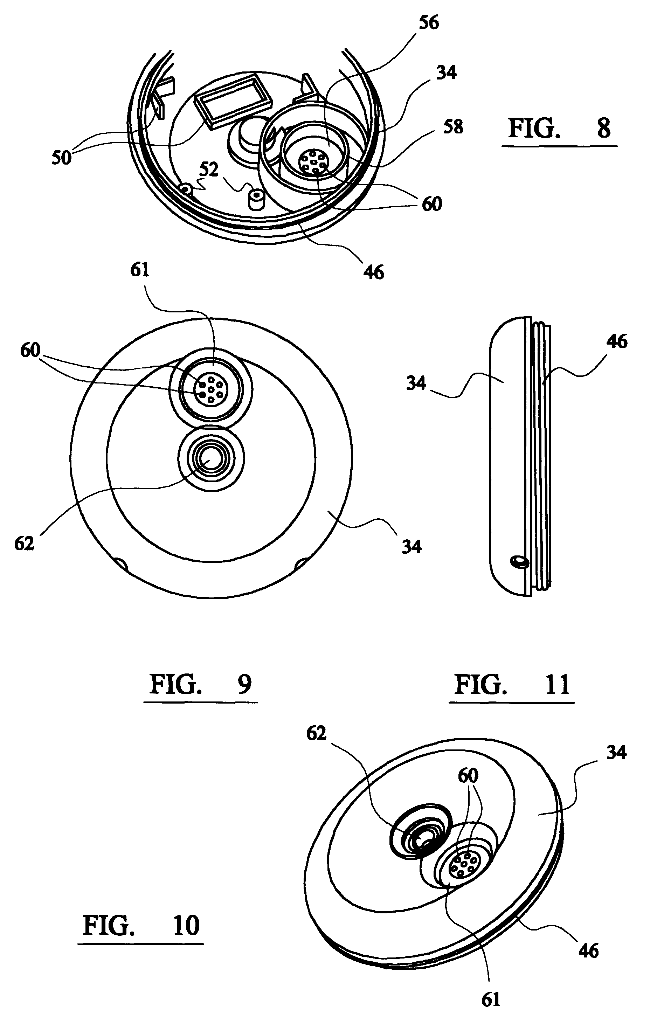

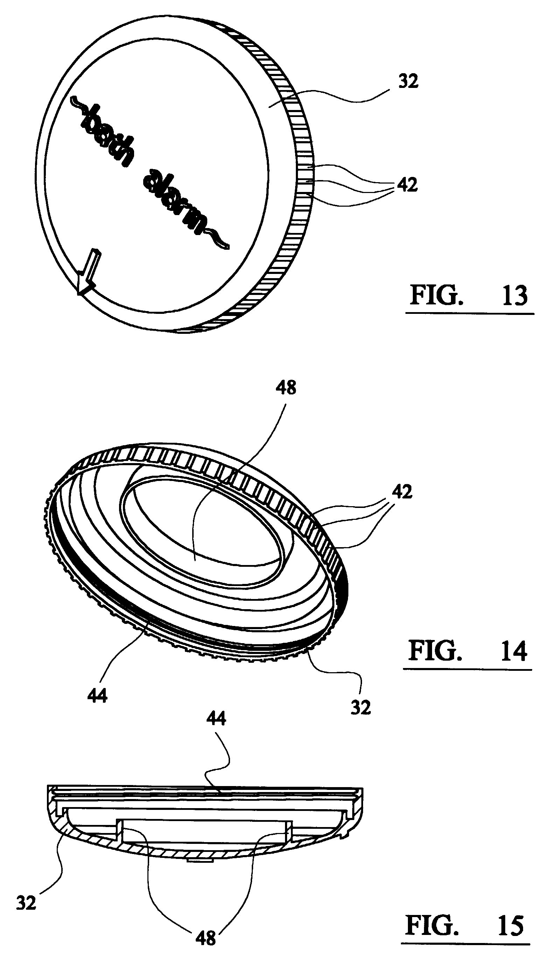

In more detail, the cover 32 has a circular shape, around the periphery of which are ribs 42 which allow the cover to be gripped. An interior of the cover 32 has a threaded section 44 (see Figure 14) which allows the cover 32 to be twisted onto a corresponding threaded section 46 (see Figures 8 and 11) of the base 34. The cover section 32 is generally dome shaped to give space for the internal components of the bath alarm 32. The cover section 32 comprises an internal cylindrical projection 48 (see Figure 14) which acts to hold the internal components, e.g. the battery 36 in position when the cover 32 is screwed on to the base 34 (see Figure 6).

The base section 34 comprises a mounting section 50 for the battery 36 (see Figures 7 and 8). Pegs 52 project from an interior face of the base 34 and provide a mounting for the printed circuit board 42. The pegs 52 may provide an electrical connection between the printed circuit board 42 and buttons 54 (see Figure 7) which extend through the base 34 from an interior thereof to the exterior. The buttons 54 are electrically conducting and are equivalent to the electrodes 24a and 24b of the first embodiment. The buttons 54 are sealingly engaged with the base 34 so that water contacting an exterior end of either of the buttons cannot enter the base section 34.

The buzzer 38 communicates with a cavity 56 (see Figure 8) which is sealed from the remainder of the interior bath alarm. A lip 58 seals, in use, against the buzzer 38 to seal the cavity 56 from the remainder of the interior of the bath alarm. Perforations 60 allow air to enter and exit the cavity 56 from the exterior of the bath alarm 30. These perforations allowing the movement of air in the cavity 56 are necessary to allow the sound produced by the buzzer to exit the bath alarm 30 by causing vibrations of the ambient air. The perforations 60 may be located in a depression 61 in the exterior of the base 34.

The sucker 40 is secured to the base section 34 by being sealingly engaged in an opening 62 (see Figure 10). In Figure 6 the manner in which the sucker 40 is sealingly engaged in the opening 62 can be seen. A collar 64 seals between a stem section 66 of the sucker 40 and the periphery of the opening 62.

In use, the cover 32 is securely and tightly screwed onto the base 34 to sealingly engage the two together and thereby prevent entry of water into the bath alarm 30. The sucker is pushed onto an interior side wall of a bath (not shown) at a level to which it is wished the water will be filled.

The taps of a bath are then switched on after a plug is inserted into a drain hole of the bath.

An arrow 68 on the cover portion 32 is arranged to point downwards so that the buttons 54 are generally horizontally arranged and also point downwards. When the water level reaches the buttons 54 an electrical contact between the buttons is made which completes the circuit including the battery 36 and buzzer 38, causing the buzzer to sound. Sound from the buzzer 38 enters the cavity 56 and exits into the bathroom via the perforations 60 and by vibration of the casing of the bath alarm. If the bath alarm is not removed from the bath and the water level continues to rise, water may enter the cavity 56 through the perforation 60. This is not desired, but will not result in damage to the bath alarm, because the cavity 56 is sealed from the remainder of the interior of the bath alarm 30. If water fills the cavity 56 the acoustic properties of the buzzer will be severely diminished, but no lasting damage will result. Water can simply be emptied from the cavity 56 by shaking.

The bath alarm described herein has significant advantages, because it allows a user to leave the room when they are filling a bath and still be warned when the bath water reaches a desired level.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A fluid level indicator (10, 30) comprises fluid level measurement means (42, 54) and indication means (22, 38), wherein the fluid level measurement means (54, 42) are operable to detect the level of a fluid in a container relative to the measurement means (42, 54) and are operable to activate the indication means (22, 38) to indicate that the level of a fluid has reached a predetermined level.

2. A fluid level indicator as claimed in claim 1, in which the indication means are visual indication means and/or audible indication means (22, 38).

3. A fluid level indicator as claimed in either claim 1 or claim 2, in which the fluid level indicator is a water level indicator for a bath.

4. A fluid level indicator as claimed in any preceding claim, in which the fluid level measurement means (42, 54) are operable to measure the fluid level by the fluid being measured completing an electrical circuit of the measurement means (42, 54).

5. A fluid level indicator as claimed in claim 4, in which the measurement comprises two electrodes (54), which are substantially flush with a housing (32, 34) of the indicator.

6. A fluid level indicator as claimed in any preceding claim which includes a sealed housing (32, 34).

7. A fluid level indicator as claimed in any preceding claim, in which the indication means (38) are audible and communicate with an internal cavity (56) in the housing (32, 34).

8. A fluid level indicator as claimed in claim 7, in which the cavity (56) is sealed from the remainder of the interior of the housing (32, 34) and communicates with the exterior of the housing.
